# EUROPEAN PATENT APPLICATION

(11) **EP 1 553 580 A1**
(43) Date of publication of application: **13.07.2005**
(21) Application number: 03764143.8
(22) Date of filing: 09.07.2003
(51) Int. Cl.: G11B 7/26, B05C 11/08, B05D 1/40

(54) **SPIN-COATING DEVICE AND METHOD OF PRODUCING DISK-LIKE RECORDING MEDIUM**

(30) Priority: 10.07.2002 JP 2002200925
(71) Applicant: TDK Corporation, Chuo-ku, Tokyo 103-8272 (JP)
(72) Inventor: YAMAGUCHI, Haruhiko, Chuo-ku, Tokyo 103-8272 (JP); YODOKAWA, Yoshimi, Chuo-ku, Tokyo 103-8272 (JP); USAMI, Mamoru, Chuo-ku, Tokyo 103-8272 (JP); USHIDA, Tomoki, Chuo-ku, Tokyo 103-8272 (JP); IDEZAWA, Seiichi, Chuo-ku, Tokyo 103-8272 (JP)
(74) Representative: Grünecker, August, Dipl.-Ing.
(86) International application number: PCT/JP2003/008703
(87) International publication number: WO 2004/008452

(57) **Abstract**

A spin-coating device where a mask that is used when a disk is spin-coated can be prevented from being damaged. Specifically, the device is structured as follows. First, a mask is placed on a disk member that is placed on a spinner and is then spin-coated. Immediately after that, processings of cleaning, rinsing, and drying are continuously applied to the single mask removed from the disk member, and the mask after processings is continuously sent to the next spin-coating process.

## Description

### TECHNICAL FIELD

The present invention relates to a device for forming a coating film by using a spin-coating method on a disk member of a substantially disk-like configuration. More specifically, the present invention relates to a device for supplying, discharging, and washing a mask used when performing film formation by using a spin-coating method for the manufacture of a CD-type disk, such as a CD, a CD-R, or a CD-RW, a DVD-type disk, such as a DVD-ROM, a DVD-R, a DVD-RW, or a DVD-RAM, an optical disk, such as a blue-laser-compatible disk that is recently under development, or a magneto-optical disk, such as an MO or an MD.

### BACKGROUND ART

Spin coating is a technique in which a liquid material is supplied to a portion near the center of a disk member and in which the disk member is rotated to spread the liquid material by centrifugal forces due to the rotation, thereby forming a film of liquid material on the surface of the disk member. The spin coating method is widely utilized, for example, in forming a protective layer for a compact disk, a DVD-type disk or the like.

In such the disks, there is formed a hole (e.g., 15Ø) for centering at the time of attachment to a disk drive device. Further, there are a groove and the like for retaining a stamper at the time of injection molding, so that no film (layer) is formed in the central portion of the disk substrate. Thus, when performing film formation (coating) on such the disks by the spin coating method, the coating is effected from the outer peripheral side instead of from the groove, etc. When the more uniform coating is required, there is provided a mask covering the central portion of the disk substrate, and the coating material is supplied from above the same to form a coating film, whereby no coating is effected in the substrate central portion.

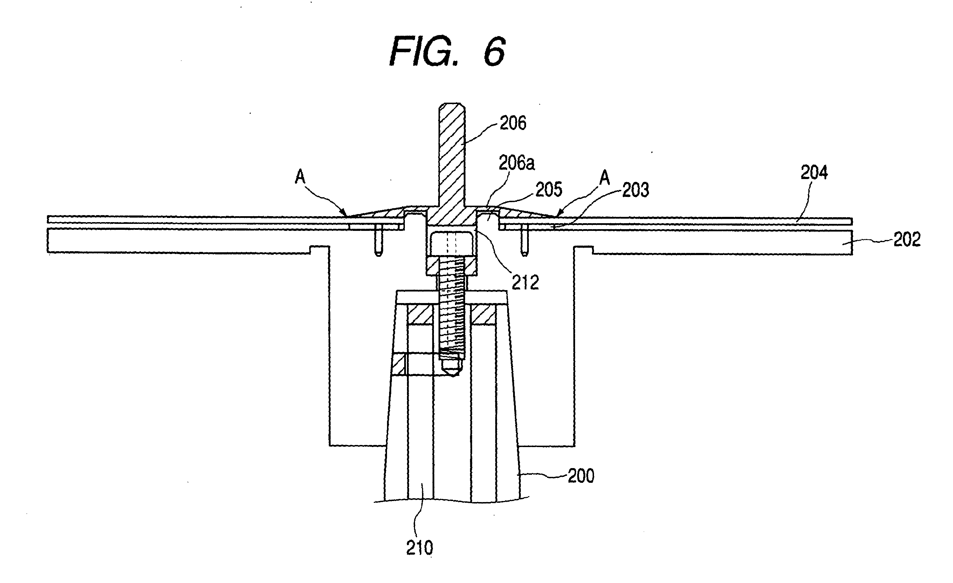

Fig. 6 shows an example of how a mask is used in a disk spin-coating device. Fig. 6 is a sectional view showing a disk set on a spinner of a spin-coating device and a mask placed thereon. A spinner table 202 is fixed to a spinner shaft 200 connected to a motor (not shown) and rotated thereby. A spacer 203 is fixed onto the spinner table 202, and a disk 204 is placed thereon. The disk 204 is vacuum-attracted to the spacer 203 by a means (not shown). Placed on the disk 204 is a mask 206 covering the central portion of the disk. At this time, an annular protrusion 205 provided near the central portion of the upper surface of the spinner table 202 and an annular groove 206a of the mask 206 are fit-engaged with each other. At the time of spin coating, a space 212 in the central portion of the spinner table 202 is evacuated through a path 210, whereby the mask 206 is attracted and retained.

In effecting coating, a liquid coating material is supplied from above to a portion near the central portion of the mask. Thereafter, the turntable is rotated at high speed, and the coating material supplied onto the mask is spread, by a centrifugal force due to the rotation, over the entire surface of the portion of the disk not covered with the mask. As a result, a coating material film (layer) is formed to a substantially uniform thickness throughout the above-mentioned portion of the disk. When the above spin-coating process has been completed, the vacuum attraction of the mask is canceled to remove the mask.

After film formation has been thus performed on the disk, processing, such as ultraviolet irradiation or disk heating, is performed on the disk surface to cure the film. In a blue-laser-compatible DVR disk or the like, which is recently under development, a blue laser with a short wavelength is used for reading information, so that a coating with a more uniform thickness is required. As an apparatus for producing such a DVR disk or the like, the present applicant has proposed a system in which a coating material is supplied onto a disk while maintaining a high level of uniformity and then the coating film is cured, wherein these processes are conducted substantially continuously.

In such a system, a number of masks are normally prepared beforehand, and the film forming process is conducted while successively supplying these masks to the individual disks. If some coating material is allowed to remain on the surface of a disk, and further coating material is supplied onto that surface, there is a fear of the condition for obtaining a uniform coating on the disk differing. Further, if some coating material remains in the boundary portion between the mask 206 and the disk 204 (the portion indicated by symbol A in Fig. 6), the back surface of the mask 206 will be contaminated when the mask 206 is separated from the disk 204. If the same mask is continuously used for the next coating, this contamination may result in the next disk on which a coating film is to be formed by using this mask being contaminated. In view of this, it is necessary to dispose the mask after each film formation process or to remove any coating material remaining thereon; usually, when the number of masks with coating material adhering thereto has reached a certain level or more, these masks are collectively immersed in a cleaning solvent or the like to thereby remove the coating material.

As stated above, at the time of applying the coating material, the boundary portion between the mask 206 and the disk 204 (the portion indicated by symbol A in Fig. 6) is also covered with the coating material. Usually, in this boundary portion, there exists a step due to the end potion of the mask 206. If the uniform portion of the coating film is to be as close as possible to this boundary portion, it is necessary for the end portion of the mask 206 to be made as thin as possible and to have a sufficient degree of flatness so that it may be reliably brought into close contact with the surface of the disk 204. That is, the peripheral end portion of the mask 206 is shaped in a thin and sharp configuration.

However, when cleaning a number of mask collectively as described above, they may come into contact with each other to damage their peripheral end portions, so that there is a fear of some masks becoming unserviceable for the next process. Thus, the process of performing cleaning, drying, etc. on the masks requires an extremely large amount of time and effort, and admittedly leaves much to be improved from the viewpoint of a reduction in cost, product control, etc. for the preparation of disks.

### DISCLOSURE OF THE INVENTION

The present invention has been made in view of the above problem in the prior art. It is accordingly an object of the present invention to provide a method of and a device for cleaning masks without involving any fear of damaging the masks. Further, the present invention aims to provide a spin-coating device and a magnetic recording medium producing method in which it is possible to produce disks or the like continuously by repeatedly using masks whose condition is well controlled.

To solve the above problem, a spin-coating device according to an aspect of the present invention relates to a spin-coating device for forming a film of a liquid material on a disk member by supplying the liquid material to a portion of the disk member near a center thereof, and rotating the disk member to spread the liquid material by a centrifugal force, the spin-coating device characterized by including:
a spinner mechanism adapted to rotate while retaining the disk member;
a mask supplying/removing mechanism which, when the disk member is rotated in the spinner mechanism, supplies the disk member with a mask covering the center of the disk member and a portion around the same and which, after the disk member has completed rotation, removes the mask from the disk member;
a dispenser mechanism which, when the disk member and the mask are retained and rotated in the spinner mechanism, supplies the liquid material to an upper surface of at least one of the disk member and the mask; and
a cleaning mechanism which receives from the mask supplying/removing mechanism a mask with the liquid material adhering thereto, cleans the mask thus received to remove the liquid material adhering thereto, and transfers the mask thus cleaned to the mask supplying/removing mechanism.

In the spin-coating device described above, the mask supplying/removing mechanism includes a mask supply arm with a chuck mechanism for grasping and releasing the mask, and a mask table adapted to pass the mask between itself and the mask supply arm and to intermittently rotate at predetermined angular intervals.

Further, the cleaning mechanism preferably includes at least one cleaning portion with a cleaning agent for cleaning the mask, a rinsing portion for rinsing the mask to remove the cleaning agent adhering to the mask, a drying portion for drying the mask after rinsing, and a conveying arm which grasps the mask and inserts the mask into the cleaning portion, the rinsing portion, and the drying portion.

Further, it is preferable that the cleaning portion, the rinsing portion, and the drying portion be substantially arranged in a circumference with a predetermined diameter at predetermined angular intervals, and wherein the conveying arm rotates intermittently at the predetermined angular intervals around a center of the circumference and, when it stops rotation, inserts the mask into the cleaning portion, the rinsing portion, and the drying portion.

Furthermore, the present invention is aimed at providing a disk member on which coating has been effected by using the spin-coating device described above.

In addition, in order to solve the above problem, according to another aspect of the present invention, there is provided a method of producing a disk-like recording medium by forming a coating film on a disk member at least by spin coating, the method being characterized by including the steps of:
placing the disk member on a spinner capable of rotating around a specific axle;
transferring the mask onto a substantially central portion of the disk member from a mask table having a mask supplying and receiving position and at least one mask standby position;
supplying a coating material to an upper surface of at least one of the disk member and the mask and rotating the spinner to spread the coating material to form the coating film;
removing the mask from the disk member and returning the mask to the mask supplying and receiving position of the mask table; and
curing the coating material on the disk member,
wherein the mask removed from the disk member and transferred onto the mask table is moved to a position by rotation together with the mask table, and wherein, starting from that position, there are sequentially performed the processings of inserting the mask into at least one cleaning portion for removing the coating material adhering to the mask, inserting the mask into a rinsing portion for rinsing the mask to remove a cleaning agent adhering to the mask, and inserting the mask into a drying portion for drying the mask, the mask that has undergone the above processings being sequentially placed on a further disk member.

### BRIEF DESCRIPTION OF THE DRAWINGS

Fig. 1 is a plan view schematically showing the construction of a mask cleaning portion, etc. constituting main portions of a spin-coating device according to an embodiment of the present invention.
Fig. 2 is a schematic side view showing the construction of a mask supplying/discharging portion (55a) shown in Fig. 1.
Fig. 3 is a schematic side view showing the construction of a mask supplying/discharging portion (55b) shown in Fig. 1.
Fig. 4 is a side view schematically showing the construction of the cleaning portion, etc. shown in Fig. 1.
Fig. 5 is a side view schematically showing the construction of a drying portion, etc. shown in Fig. 1.
Fig. 6 is a sectional view illustrating an example of how a mask is used in a conventional spin-coating device, showing a disk and a mask that are placed on a spinner.

### BEST MODE FOR CARRYING OUT THE INVENTION

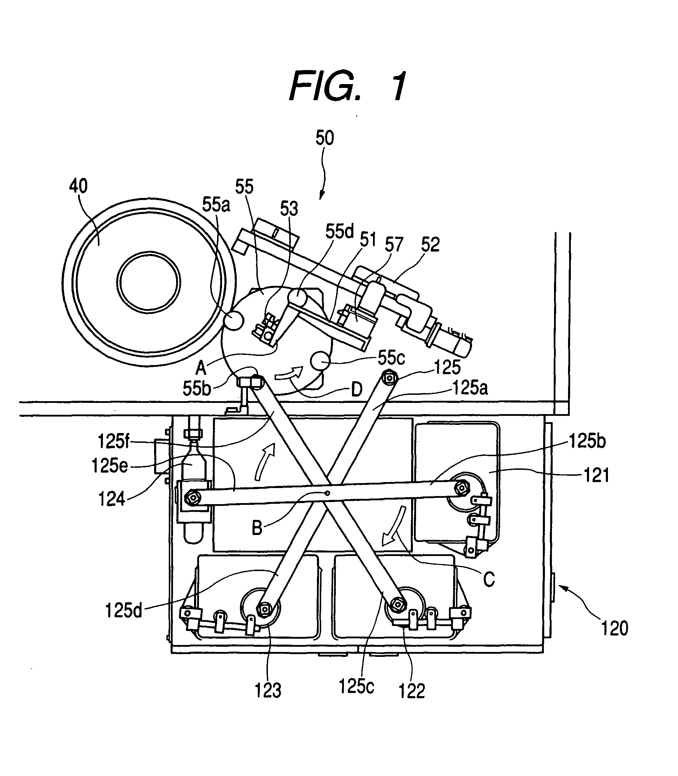

In the following, a preferred embodiment of the present invention will be described with reference to the drawings. Fig. 1 is a schematic plan view showing the construction of main components of a spin-coating device according to an embodiment of the present invention, such as a spin coater and a mask supplying portion. A substrate (not shown) is retained at a central portion of a spinner 40 constituting a part of a spinner mechanism, and rotation of the substrate and application of a coating material are effected. A mask supplying/discharging portion 50 constituting a mask supplying/discharging mechanism is composed of a mask table 55, a mask moving arm 51, and an arm driving mechanism 52.

The mask table 55 is intermittently rotated around an axle A in the direction indicated by the arrow D in the drawing such that it stays for a predetermined period of time at each of predetermined angles corresponding to four positions 55a through 55d.

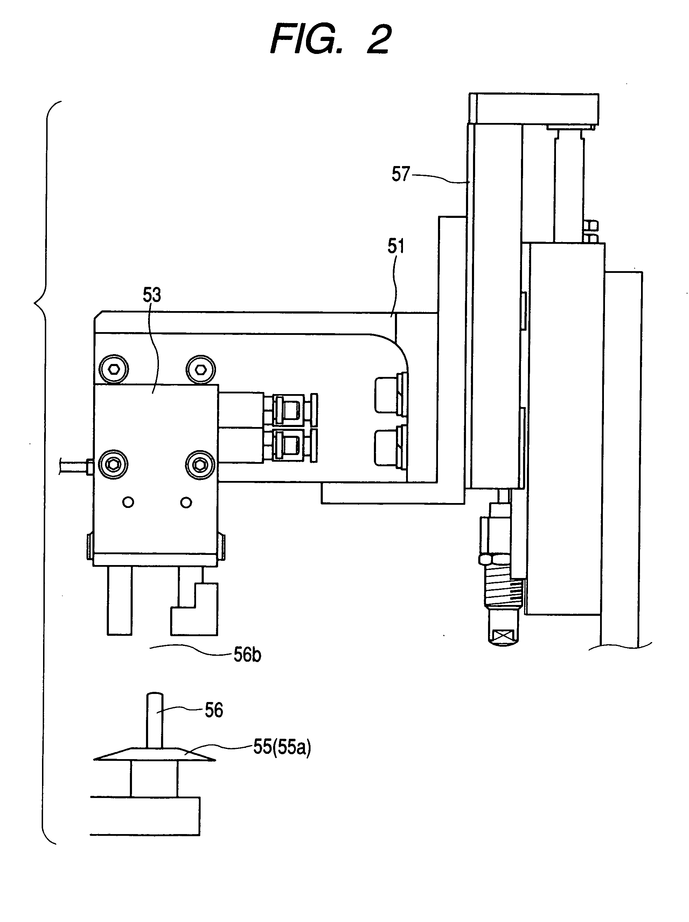

Fig. 2 is a schematic side view showing the construction of the mask moving arm 51, etc. as seen from the direction of the position 55c. A mask 56 with an upper protrusion 56b is placed at the position 55a of the mask table 55. The mask moving arm 51 is vertically driven by means of an air cylinder 57 arranged in the arm driving mechanism 52. A chuck mechanism 53 arranged at the distal end of the mask moving arm 51 is lowered together with the arm 51 by the air cylinder 57 to a height where it can grasp the upper protrusion 56b. Further, driving air or the like is supplied from outside to the chuck mechanism 53 to close the chuck to thereby grasp the upper protrusion 56b. After that, the mask moving arm 51 ascends to a predetermined height together with the chuck mechanism 53 retaining the mask 56, and is driven by the arm driving mechanism 52 until the mask 56 is situated directly above the center of the spinner 40. At this position, the lowering of the mask moving arm, etc. and the canceling of the grasping of the mask upper protrusion 56b by the chuck mechanism 53 are effected, thus completing the placing of the mask on the substrate.

When some coating material has been allowed to adhere to the mask 56, the mask 56 is removed from the substrate (not shown) by causing the mask moving arm 51 and the chuck mechanism 53 to perform an operation reverse to the above-described operation for placing the mask 56. Further, the mask 56 is returned to the position 55a on the mask table 55 by the chuck mechanism, etc., and is placed on the mask table 55. With the intermittent rotation of the mask table 55 around the axle A, the mask 56 is carried to the position 55b and stops there. From this position, the mask 56 is carried to a mask cleaning portion 120 shown in Fig. 1. The mask cleaning portion 120 constitutes a mask cleaning mechanism.

The mask cleaning portion 120 is constructed of first and second cleaning portions 121 and 122, a rinsing portion 123, and a drying portion 124, each of which being a processing portion, a conveying arm 125 for conveying the mask to these processing portions and to the position 55b constituting a mask extracting/supplying portion, etc. The conveying arm 125 rotates intermittently around an axle B as its center in the direction indicated by the arrow C in the drawing such that it stays for a predetermined period of time at each of the predetermined angles (60 degrees in this case) respectively corresponding to the processing portions and the position 55b. Further, during its stay for a predetermined period of time, the conveying arm 125 is caused to descend by a predetermined amount, to stay at the lowered position for a fixed period of time, and to ascend to its normal position by a vertical drive mechanism (not shown). Further, the conveying arm 125 has around an axle B a plurality of arm portions 125a through 125f arranged radially at the intervals of the above-mentioned predetermined angles, with a cleaning portion chuck mechanism 126 being arranged at a distal end of each arm portion.

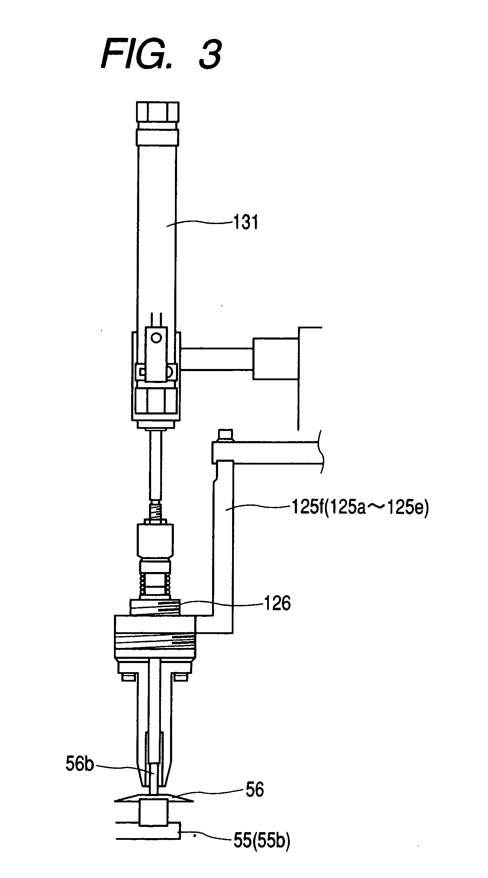

Fig. 3 is a schematic side view showing a state in which the cleaning portion chuck mechanism 126 retains the upper protrusion 56b of the mask 56 at the position 55b. The chuck mechanism 126 used is of the type which is normally in the grasping state and whose chuck portion is adapted to be opened or closed through external operation. In this embodiment, an air cylinder is used as the external operation mechanism, and a cleaning portion air cylinder 131 that can be vertically driven by a driving mechanism (not shown) is arranged right above the position 55b. When the conveying arm 125 is lowered to make it possible for the chuck mechanism 126 to grasp the upper protrusion 56b of the mask existing at the position 55b, or when the chuck mechanism 126 grasping the protrusion 56b is lowered to place the mask at the position 55b, the cleaning portion air cylinder 131 is lowered and connected to the chuck mechanism 126, causing the chuck mechanism 126 to perform the operation of grasping or releasing.

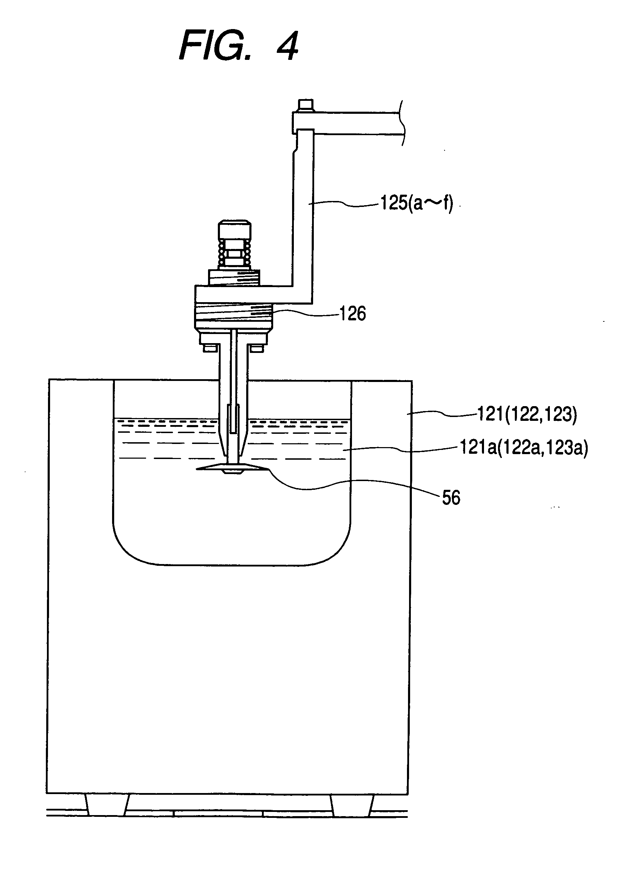

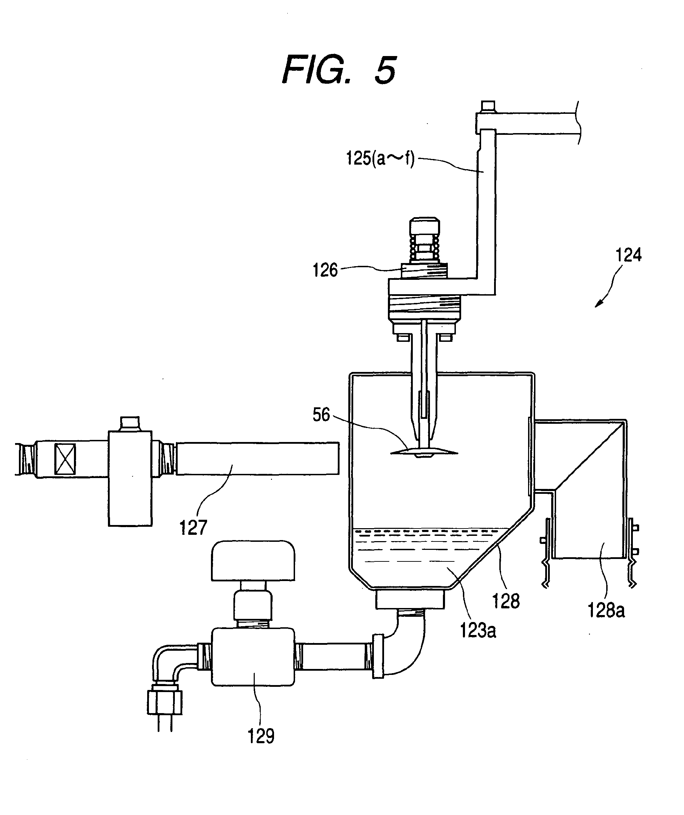

In the following, the procedures for the cleaning processing, etc. will be described in detail with reference to Figs. 3, 4, and 5 schematically showing the mask cleaning processing in the first and second cleaning portions and the mask drying processing in the drying portion. The chuck mechanism 126 grasping the mask at the position 55b ascends to the normal position with the ascent of the conveying arm 125, and is rotated about the axle B by a predetermined angle to perform stopping, descent, stopping for a fixed period of time, and ascent before being further rotated by a predetermined angle. By this lowering operation, the mask 56 is inserted into each processing portion. While in this embodiment, due to the arrangement of the mask cleaning portion 120, there are involved such vertical movements, etc. of the mask and the chuck mechanism 126, which have nothing to do with the actual cleaning processing, it is also possible to make these movements to contribute to the cleaning processing through arrangement of the processing portions, etc.

The chuck mechanism 126 is further rotated by a predetermined angle and stopped above the first cleaning portion 121. The first cleaning portion 121 has an ultrasonic cleaning vessel storing a cleaning solvent 121a. By being lowered at the stop position, the portion of the chuck mechanism 126 grasping the mask and the mask 56 are immersed in the cleaning solvent 121a, to which a vibration of an ultrasonic wave range is imparted, thereby effecting processings, such as the dissolving of the coating material adhering to the surface of the mask. After being retained for a fixed period of time in this state, the mask 56 ascends with the conveying arm 125, and then is rotated to a position above the second cleaning portion to stop there.

The second cleaning portion 122 has an ultrasonic wave cleaning vessel storing a cleaning solvent of a composition similar to that of the cleaning solvent 121a, and has a basic construction similar to that of the first cleaning portion 121. By performing ultrasonic cleaning again on the surface of the mask 56 using the cleaning solvent 122a, it is possible to completely dissolve and remove the coating material remaining on the surface. After being retained in the second cleaning portion 122 for a fixed period of time, the mask 56 is extracted from the cleaning vessel, as in the case of the first cleaning portion 121, and immersed in a rinsing portion 123 arranged at the next stop position for the conveying arm.

The rinsing portion 123 has an ultrasonic wave cleaning vessel storing a rinsing agent 123a, and has a basic construction similar to that of the first cleaning portion 121. By rinsing the mask 56 within the rinsing agent 123a, it is possible to remove any cleaning solvent 122a, etc. remaining on the mask surface. Thus, it is desirable for the rinsing agent 123a to be a material compatible with the cleaning agent 121a, etc.; further, it is desirable to adopt a material more vaporizable than the cleaning agent 121a, etc. The mask 56 is retained inside the rinsing portion 123 for a fixed period of time, and then extracted from the cleaning vessel, as in the case of the first cleaning portion 121, before being transferred to a drying portion 124 arranged at the next stop position for the conveying arm.

The drying portion 124 includes a nozzle 127 for supplying a drying gas for blowing away the rinsing agent 123a adhering to the mask surface, a cover 128 for preventing the rinsing agent 123a blown away from being scattered around, a drain 129 for discharging rinsing agent accumulated in the cover 128, and an intake duct 128a for discharging the rinsing agent 123a vaporized within the cover. In the drying portion 125, the rinsing agent 123a adhering to the surface of the mask 56, etc. is removed by blowing a drying gas, such as highly clean dry nitrogen, introduced through the nozzle 127 against it, thus drying the surface of the mask 56 in a clean state.

After the blowing of the drying gas for a fixed period of time has been completed, and the drying of the surface of the mask 56 has been completed, the mask 56 is extracted from the drying portion 124 in the same procedure as those described above, and conveyed through rotation to the position 55b. After the completion of the drying, the mask is transferred to the mask table 55 at the position 55b, and reaches the position 55a by way of the positions 55c and 55d. From the position 55a, the mask 56 is driven, together with the chuck mechanism 53 grasping the same, etc., to a position right above the center of the spinner 40 by the arm moving mechanism 52 in order that the mask 56, cleaned and dried, may be used again for film formation on a substrate. From this onward, the above-described operations are repeatedly executed.

By adding the above-described mask cleaning portion 120 to the spin-coating device and performing mask cleaning for each application of the coating material to the substrate, it is possible to conduct spin coating without involving any fear of damaging the mask. Further, due to the construction in which the masks are individually handled and cleaned, it is possible to perform mask control simultaneously with spin coating. Thus, it is possible to perform spin coating using a minimum requisite number of masks, making it possible to reduce the number of masks, which require a high precision processing step and reliable control, and to achieve a reduction in the operational cost, etc. for spin coating.

While in this embodiment the mask table stops at four positions and the conveying arm in the cleaning portion is composed of six lines, this should not be construed restrictively; it is desirable to make appropriate modifications taking into account the requisite processing time, etc. for each substrate or more efficient cleaning procedures. That is, when the coating time for one substrate is shorter, the number of stop positions for the mask table may be increased. Further, when more solvent or the like is required in the cleaning process, it is desirable to increase the number of conveying arms and of cleaning portions.

Further, while in this embodiment the cleaning agents 121a and 122a are of the same composition, they may also be of different compositions according to the cleaning condition, etc. Regarding the cleaning portions, ultrasonic wave cleaning is not indispensable but may be eliminated. Conversely, it is also possible to apply ultrasonic vibrations of different frequencies to the same cleaning portion at different points in time, or to apply such vibrations independently to different cleaning portions using the same cleaning solvent, etc. Further, the agent for dissolving the coating material is not restricted to a cleaning solvent; it is possible to adopt various agents, such as organic solvent, inorganic solvent, acid, or alkali.

Further, while in this embodiment no particular mention is made of the temperature of the cleaning solvent, etc., it is desirable for the temperature of the cleaning solvent, etc. to be maintained at a fixed level. Further, taking into account the processing time, etc., it is also possible to maintain the cleaning solvent, etc. at a predetermined constant temperature not higher than the melting point thereof. In this case, it is desirable to additionally equip the ultrasonic wave vessel or the like with a heater allowing temperature adjustment and a cover for preventing spread of the vaporized cleaning solvent, an intake duct, etc.

Further, while in this embodiment the chuck mechanism used is one of the external operation types, it is also possible to adopt one of some other types as long as it has a more convenient structure; further, the driving mechanism is not restricted to an air cylinder or the like as used in this embodiment. Regarding the arm moving mechanism, no particular mention is made since it is possible to adopt various types of mechanism; however, from the viewpoint of stopping accuracy and convenience, it is desirable to adopt one formed by a ball screw or the like.

The above-described mask cleaning portion of the present invention has been devised to be added to a spin-coating device whose main component is the spinner 40. Thus, there are no particular limitations regarding the type, etc. of spin-coating device to which it is to be added; the mask cleaning portion of the present invention can be added to various types of spin-coating device as long as it is possible to ensure the space that allows the addition of the mask cleaning portion.

According to the present invention, the above-described mask cleaning portion 120 is added to a spin-coating device, and mask cleaning is performed for each application of coating material to a substrate, whereby it is possible to perform spin coating without involving any fear of damaging the masks. Further, due to the construction in which cleaning is performed while individually treating the masks, it is possible to effect mask control simultaneously with spin coating. Thus, spin coating can be conducted with a minimum requisite number of masks. This means it is possible to reduce the number of masks, which require a high precision processing step and reliable control, whereby it is also possible to reduce the operational cost, etc. for spin coating.

## Claims

1. A spin-coating device for forming a film of a liquid material on a disk member by supplying the liquid material to a portion of the disk member near a center thereof, and rotating the disk member to spread the liquid material by a centrifugal force, the spin-coating device comprising:
a spinner mechanism adapted to rotate while retaining the disk member;
a mask supplying/removing mechanism which, when the disk member is rotated in the spinner mechanism, supplies the disk member with a mask covering the center of the disk member and a portion around the same and which, after the disk member has completed rotation, removes the mask from the disk member;
a dispenser mechanism which, when the disk member and the mask are retained and rotated in the spinner mechanism, supplies the liquid material to an upper surface of at least one of the disk member and the mask; and
a cleaning mechanism which receives from the mask supplying/removing mechanism a mask with the liquid material adhering thereto, cleans the mask thus received to remove the liquid material adhering thereto, and transfers the mask thus cleaned to the mask supplying/removing mechanism.

2. A spin-coating device according to Claim 1, wherein the mask supplying/removing mechanism comprises a mask supply arm with a chuck mechanism for grasping and releasing the mask, and a mask table adapted to pass the mask between itself and the mask supply arm and to intermittently rotate at predetermined angular intervals.

3. A spin-coating device according to Claim 1, wherein the cleaning mechanism comprises at least one cleaning portion with a cleaning agent for cleaning the mask, a rinsing portion for rinsing the mask to remove the cleaning agent adhering to the mask, a drying portion for drying the mask after rinsing, and a conveying arm which grasps the mask and inserts it into the cleaning portion, rinsing portion, and the drying portion.

4. A spin-coating device according to Claim 3, wherein the cleaning portion, the rinsing portion, and the drying portion are substantially arranged in a circumference with a predetermined diameter at predetermined angular intervals, and wherein the conveying arm rotates intermittently at the predetermined angular intervals around a center of the circumference and, when it stops rotation, inserts the mask into the cleaning portion, the rinsing portion, and the drying portion.

5. A disk member on which coating has been effected by using a spin-coating device as claimed in one of Claims 1 through 4.

6. A method of producing a disk-like recording medium by forming a coating film on a disk member at least by spin coating, the method comprising the steps of:
placing the disk member on a spinner capable of rotating around a specific axle;
transferring the mask onto a substantially central portion of the disk member from a mask table having a mask supplying and receiving position and at least one mask standby position;
supplying a coating material to an upper surface of at least one of the disk member and the mask and rotating the spinner to spread the coating material to form the coating film;
removing the mask from the disk member and returning the mask to the mask supplying and receiving position of the mask table; and
curing the coating material on the disk member,
wherein the mask removed from the disk member and transferred onto the mask table is moved to a position by rotation together with the mask table, and wherein, starting from that position, there are sequentially performed the processings of inserting the mask into at least one cleaning portion for removing the coating material adhering to the mask, inserting the mask into a rinsing portion for rinsing the mask to remove a cleaning agent adhering to the mask, and inserting the mask into a drying portion for drying the mask, the mask that has undergone the above processings being sequentially placed on a further disk member.
